Europäisches Patentamt

European Patent Office

Office européen des brevets

(11) Veröffentlichungsnummer: **0 443 567 A1**

(12) **EUROPÄISCHE PATENTANMELDUNG**

(21) Anmeldenummer: 91102509.6

(22) Anmeldetag: 21.02.91

(51) Int. Cl.5: **E02D 31/00, B09B 1/00**

(30) Priorität: 23.02.90 DE 4005839

(43) Veröffentlichungstag der Anmeldung:
28.08.91 Patentblatt 91/35

(84) Benannte Vertragsstaaten:
AT BE CH DE DK ES FR GB GR IT LI LU NL SE

(71) Anmelder: **Wagner, Jean-Frank**
**Goethestrasse 15**
**W-7500 Karlsruhe 1(DE)**

(72) Erfinder: **Wagner, Jean-Frank**
**Goethestrasse 15**
**W-7500 Karlsruhe 1(DE)**

(74) Vertreter: **Zahn, Roland, Dipl.-Ing.**
**Im Speitel 102**
**W-7500 Karlsruhe 41(DE)**

(54) **Basisabdichtung einer Abfalldeponie.**

(57) Für eine vorzugsweise mineralische Basisabdichtung einer Abfalldeponie ist vorgeschlagen, mindestens zwei getrennte (vorzugsweise mineralische) Dichtungsschichten (2,3) vorzusehen, von denen eine, nämlich die dem Abfall zugewandte (im folgenden "aktive" Schicht genannte) Schicht (3) aus einem gegenüber chemischen Lösungen instabilen Material besteht, und die zweite, nämlich die dem gewachsenen Boden zugewandte (im folgenden "inaktive" Schicht genannte) Schicht (2) aus einem chemisch beständigen Dichtungsmaterial besteht.

Die "aktive" Dichtungsschicht (3) übernimmt dabei die Aufgabe, die Schadstoffe über chemische Rektionen zu "neutralisieren"; die "inaktive" Schicht (2) sorgt aufgrund ihrer minimalen Permeabilität dafür, daß die Sickerwässer mit ihren Schadstoffen sehr lange daran gehindert werden, aus der aktiven Schicht auszutreten, so daß die Reaktionszeit sehr lang ist.

EP 0 443 567 A1

Die vorliegende Erfindung bezieht sich auf eine Basisabdichtung einer Abfalldeponie.

In Deponien werden Abfälle ohne oder nach Vorbehandlung kontrolliert und verdichtet abgelagert. Der dafür erforderliche Flächenbedarf kann vermindert werden, wenn die Abfälle vor der Ablagerung unter Energieausnutzung verbrannt werden oder wenn ein Teil der Abfälle durch Kompostierung landwirtschaftlich verwertet wird. Gesetzliche Vorschriften fordern bei der Einrichtung von Deponien den Schutz des Untergrundes und des Grundwassers. Wenn am Standort der Deponie kein naturdichter Untergrund vorhanden ist, so wird in den meisten Fällen eine Deponiebasisabdichtung vorgenommen. In eine Deponie, die oberhalb des Grundwasserspiegels angelegt wird und deren Untergrund gegen das Grundwasser abgedichtet ist, können bei entsprechender Betriebsführung und unter Aufsicht von geschultem Personal auch bestimmte chemische Rückstände eingebracht werden, ohne daß Belästigungen oder Schädigungen der Umwelt eintreten. In die Abschätzung der Umweltverträglichkeit ist insbesondere auch das Langzeitverhalten einzubeziehen. Maßnahmen zur Langzeitsicherung sind hauptsächlich Sickerwasserbeseitigung, Entgasung, Sicherung der Standfestigkeit und Pflege der Rekultivierungsmaßnahmen.

Das generelle Ziel sämtlicher Basisabdichtungen ist die möglichst vollständige Zurückhaltung von Deponiesickerwässern und der darin enthaltenen Schadstoffe. Deshalb werden an ein Abdichtungssystem die Forderungen nach einer möglichst geringen Durchlässigkeit und nach einer möglichst hohen Sorptionskapazität gestellt.

Diese Forderungen sollen gemäß dem Entwurf der technischen Anleitung "Sonderabfall" mit einer Basisabdichtung folgenden Mindestaufbaus erfüllt werden:

- 150 cm mineralische Dichtungsschicht,
- 2,5 mm Kunststoffdichtungsbahn,
- Geotextil- und Entwässerungssystem.

Die mineralische Dichtungsschicht soll dabei in sechs Lagen mit je 25 cm Dicke aufgebracht werden; damit soll ein Durchlässigkeitsbeiwert $k < 10^{-10}$ m/s erreicht werden. Der Anteil an Tonmineralien an dieser mineralischen Dichtungsschicht ist dabei auf das erforderliche Adsorptionsvermögen abzustimmen und soll mindestens 10 Gewichts-Prozent betragen.

Die bekannten Basisabdichtungen, d.h. die konventionellen Abdichtungsmaterialien wie Kunststoff-Folie und mineralische Dichtung weisen eine sehr geringe Wasserdurchlässigkeit auf. Besteht die mineralische Dichtung beispielsweise aus einem quellfähigen Tonmineralgemisch wie Bentonit, so ist auch eine sehr hohe Sorptionskapazität gegeben. Für die genannten Dichtungsmaterialien kann allerdings bei einem chemischen Angriff die für den sicheren Betrieb einer Deponie geforderte und zu fordernde Beständigkeit über geschichtliche Zeiträume hinweg betrachtet nicht eindeutig nachgewiesen werden (vergleiche FINSTERWALDER, K. (1989): Stofftransport Prozesse in Deponie-Ummantelungen von Altlasten - Ihr Einfluß auf den Entwurf der Abdichtungen. - In: JESSBERGER (Hrsg.): Erkundung und Sanierung von Altlasten. 99-106, Balkema, Rotterdam). Eine bloße Einkapselung in eine Gummihaut mag zwar während Jahren oder Jahrzehnten dicht sein, ein plötzliches Versagen kommt jedoch einer Zeitbombe gleich.

Bei einer Basisabdichtung aus Bentonit oder bentonitähnlichen Tongemischen nimmt die Permeabilität infolge der Sorptionsprozesse allmählich zu. Dies ist einerseits in der Praxis durch nach einigen Jahren aufgetretene und beobachtete Tonmineralveränderungen belegt (vergleiche ECHLE, W., CEVRIM, M. & DULLMANN, H. (1988): Tonmineralogische, chemische und geotechnische Veränderungen in mineralischen Basisabdichtungen nach langjährigem Deponiebetrieb.- In: CZURDA, K.A. & WAGNER J.-F. (Hrsg): Tone in der Umwelttechnik. Schr.Angew. Geol.Karlsruhe, 4:99-121, Karlsruhe); andererseits ist dies aber auch aufgrund theoretischer Überlegungen absehbar (vergleiche LAHANN, R.W. & ROBERSON, H.E. (1980): Dissolution of silica from montmorillonite: effect of solution chemistry.- Geochim. Cosmochim. Acta, 44). Aufgrund kristallchemischer und thermodynamischer Überlegungen gelangen LIPPMANN (vergleiche LIPPMANN, F. (1979): Stabilitätsbeziehungen der Tonminerale.- N. Jb. Miner Abh., 136) sowie MAY et al. (vergleiche MAY, H.M. et al. (1986): Aqueous dissolution, solubilities and thermodynamic stabilities of common aluminosilicate clay minerals: kaolinite and smectites.- Geochim. Cosmochim. Acta 50) zu der Erkenntnis, daß Illite und Smektite vollständig instabile Phasen darstellen. Die Zunahme der Durchlässigkeit bentonitischer Abdichtungsmaterialien nach ihrer Behandlung mit organischen Stoffen konnte experimentell nachgewiesen werden (vergleiche ALTHER, G.R. (1987): The Qualification of Bentonite as a Soil Sealant.- Engineering Geology, 23:177-191, Amsterdam; ANDERSON, D. (1982): Does landfill leachate make clay liners more permeable? - Civil Engineering ASCE, 9:66-69; HASENPATT, R. (1988): Bodenmechanische Veränderungen reiner Tone durch Adsorption chemischer Verbindungen.- Mitt. Institut f. Grundbau und Bodenmechanik ETH Zürich, 134; HASENPATT, R. et al. (1988): Durchlässigkeit und Diffusion in Tonen.- Mitt. Insitut f. Grundbau und Bodenmechanik ETH Zürich, 13:65-76, Zürich). Auch die Wechselwirkungen zwischen anorganischen Schadstoffen und Smektiten beeinträchtigen die Durchlässigkeit der Tone. Durch den Einbau einzelner Schwermetallionen sowie die Einlagerung von Metallhydroxidschichten in die Zwischenschichten der Smektite kommt es zu einer Chloritisierung, wodurch die Austauschkapazität der Smektite stark herabgesetzt wird. Dies führt wiederum zu Volumenveränderungen und zum Verlust der Quellfähigkeit, sowie der Plastizität (vergleiche WAGNER, J.-F. (1988): Migration of lead and zinc in different clay rocks.- Int. Symp. Hydrogeology and safety of radiactive and indrustrial hazardous waste disposal.- IAH, Orleans, Doc. B.R.G.M. No. 160:617-628, Orleans).

Letztendlich ist die Langzeitstabilität der Smektite infolge der ständig ablaufenden Wechselwirkungen mit den Sickerwasserkomponenten nicht gegeben. Aus diesem Grunde werden zunehmend mineralische Dichtungsmaterialien aus stabileren Tonmineralgemischen, sogenannten kaolinitischen Tonen, verwendet. Diese zeigen aber nur minimale Sorptionseigenschaften, so daß sie dem Sickerwasser auch nur ein Minimum an Schadstoffen entziehen können.

Die der vorliegenden Erfindung zugrunde liegende Aufgabe ist - ausgehend vom vorgenannten Stand der Technik- darin zu sehen, daß eine Basisabdichtung für eine Deponie geschaffen wird, mit der einerseits eine höchst mögliche Schadstoffentfernung aus dem Sickerwasser von Haus- und Sondermülldeponien, und andererseits eine Langzeitstabilität einer minimalen Durchlässigkeit für das Sickerwasser selbst gewährleistet sind.

Diese Aufgabe wird gemäß der vorliegenden Erfindung dadurch gelöst, daß mindestens zwei getrennte mineralische Dichtungsschichten vorgesehen sind, deren eine, nämlich die dem Abfall zugewandte (im folgenden "aktive" Schicht genannte) Schicht aus einem gegenüber chemischen Lösungen instabilen Material besteht, und deren zweite, nämlich die dem gewachsenen Boden zugewandte (im folgenden "inaktive" Schicht genannte) Schicht aus einem beständigen Dichtungsmaterial besteht.

Mit anderen als im Patentanspruch 1 gebrauchten Worten basiert die Basisabdichtung somit auf einem kombinierten Einbau von mindestens zwei (vorzugsweise mineralischen) Dichtungsschichten mit zwei spezifischen unterschiedlichen Funktionsbeziehungsweise Wirkungsweisen. Diese mehrfache Basisabdichtung besteht also aus mindestens zwei getrennten Dichtungsschichten, von denen eine die Sorptionsaufgabe übernimmt und die andere eine langzeitlich geringe Durchlässigkeit gewährleistet.

Durch den Einbau einer "mehrfachen Basisabdichtung", d.h. zweier verschiedener lagen mit unterschiedlicher Funktionsweise, ist eine möglichst große Filterwirkung für Schadstoffe ebenso gegeben, wie eine große und beständige Dichtigkeit gegenüber Wasser. Bezogen auf den konkreten Verwendungsbeziehungsweise Anwendungsfall besteht eine dem natürlichen Boden benachbarte untere Dichtungsschicht dabei aus einem "inaktiven", sehr beständigen Dichtungsmaterial, während eine dem Abfall zugewandte obere Dichtungsschicht aus einem gegenüber chemischen Lösungen sehr instabilen "aktiven" Material aufgebaut ist.

Die "inaktive" Dichtungsschicht besteht vorzugsweise aus einem sehr feinkörnigen Material, welches eine sehr geringe Permeabilität aufweist. Hier kommen in erster Linie natürliche kaolinitische Tone oder mit Kaolin vergütete Tone in Frage. Die Vergütung kann dabei durch Zugabe von sehr fein gemahlenem Quarzmehl oder Wasserglas noch verbessert werden. Neben Kaolinen kommen auch andere, chemisch sehr stabile Tone in Betracht. Wesentlich ist, daß die Materialien, aus denen die "inaktive" Dichtungsschicht aufgebaut ist, auf jeden Fall chemisch sehr stabile, schwer lösliche Mineralphasen darstellen. Für den Fall, daß auch in der "inaktiven" Schicht smektitisches Material einzubauen ist, ist darauf zu achten, daß in diesem Falle der Smektit Kalzium-Charakter besitzt, da dieser nicht so reaktiv wie die Natriumvariante ist.

Die "aktive" Dichtungsschicht wird aufgebaut aus Mineralien mit sehr hoher Sorptionsfähigkeit, wie zum Beispiel Smektiten (Hauptmineral der Bentonite), Palygorskiten, Sepioliten, Allophanen, Zeolithen, Nontroniten, Attapulgiten, Beringiten, Perliten sowie Eisen- und Manganoxiden und -hydroxiden und/oder auch sehr reaktionsfreudigen Mineralphasen wie Carbonaten, Sulfaten und Chloriden, welche durch ihre sehr hohe Löslichkeit äußerst rasch Verbindungen mit anorganischen Schadstoffen eingehen können. Die in der "aktiven" Dichtungsschicht einzubauende Smektite sollten möglichst einen Natrium-Charakter besitzen, da diese die höchsten Sorptionseigenschaften aufweisen. Als Dichtungsmaterial kommen natürliche mit den oben beschriebenen Mineralien angereicherte Tone oder mit Bentonit beziehungsweise den oben beschriebenen Mineralien vergütete Tone in Betracht. Daneben können in der "aktiven" Dichtungsschicht auch nicht oder nur zum Teil mineralische Materialien wie Aktivkohle und/oder Flugasche Verwendung finden. Die Dichtung kann durch eine eingebaute Kunststoff-Folie-oberhalb und/oder unterhalb der "inaktiven" Schicht und/oder oberhalb der "aktiven" Schicht-zusätzlich verstärkt werden.

Die reaktionsfreudige "aktive" Dichtungsschicht entzieht dabei dem Sickerwasser möglichst viele Schadstoffe, welche an den Oberflächen- beziehungsweise im Kristall oder als neue Mineralphase festgelegt werden. Diese Reaktionen in der aktiven Schicht führen allerdings mit der Zeit zu einer vollständigen Umbildung dieser "aktiven" Dichtungsschicht, was auch mit einer Veränderung der bodenmechanischen Eigenschaften, d.h. vor allem auch mit einer Heraufsetzung der Permeabilität, verbunden ist. Die Beständigkeit einer sehr geringen Permeabilität wird durch den Einbau einer gegenüber den Schadstoffen nicht reaktionsfähigen Deponieschicht, der sogenannten "inaktiven" Dichtungsschicht gewährleistet, die vorzugsweise aus einem kaolinitischen Ton gebildet wird. Hierdurch wird auch gewährleistet, daß die Sickerwässer möglichst lange zurückgehalten werden und so die Reaktionszeit zwischen der "aktiven" Dichtungsschicht und den Schadstoffen sehr lange anhält.

Die Durchlässigkeit der "inaktiven" Dichtungsschicht kann durch Wahl eines entsprechenden Druckgradienten so gering gehalten werden, daß sie im strömungslosen Bereich zu liegen kommt. Dies ist allerdings nicht unbedingt erforderlich und unter Umständen auch nicht wünschenswert, da hierdurch zwar der konvektive Transport verhindert würde, der diffusive Transport aber nicht auszuschalten wäre. Deshalb sind die k-Werte der "inaktiven" Dichtungsschicht nur insoweit herabzusetzen, als der konvektive Stofftransport ähnlich groß ist wie der diffusive Stofftransport. Wird durch aufwendige Verdichtungsmaßnahmen oder andere Zusätze der konvektive Transport kleiner als der diffusive Transport gewählt, so ist dies zum einen überflüssig, da die Schadstoffwanderung hierdurch nicht beeinflußt wird; zum anderen ist ein gewisser Wasserdurchtritt durch die "inaktive" Dichtungsschicht erwünscht, da durch einen völligen Aufstau der Sickerwässer in der Deponie eine vollkommene Auslaugung stattfinden könnte, was jedoch nicht unbedingt wünschenswert ist.

Die Dicken, d.h. Mächtigkeiten der beiden in Kombination eingebauten Dichtungsschichten sind wie folgt zu wählen. In der "aktiven" Dichtungsschicht sollen möglichst alle Schadstoffe mit dem vorhandenen Sorptionsmaterial reagieren können, so daß dem Sickerwasser sämtliche Schadstoffe entzogen werden; das Reaktionspontential ist also gleich groß dem Eluationspotential. Die Mächtigkeit der "inaktiven" Dichtungsschicht ist so zu wählen, daß die Wassergeschwindigkeit etwas kleiner beziehungsweise gleich groß der diffusiven Transportgeschwindigkeit ist. Zwar ist die Durchlässigkeit für Kaoline möglicherweise nicht so gering wie für Bentonite und andere chemisch reaktive Tone, es ist aber gewährleistet, daß bei Kaolinen die einmal erzielte Durchlässigkeit über lange Zeiträume beständig ist.

Insgesamt ist noch anzumerken, daß der Deponiekörper so einzubauen ist, daß er mit dem umgebenden Gestein oder aber der eingebauten mineralischen Abdichtung so reagieren kann, daß er sich selbst hermetisch gegen die Hydrobeziehungsweise Biosphäre abschließt, d.h. versiegelt.

Die Erfindung wird nachfolgend anhand einer Schemadarstellung eines Vertikalschnitts durch eine Deponie mit einer erfindungsgemäßen mehrfachen Basisabdichtung nochmals erläutert.

Über dem gewachsenen Boden 1 befindet sich zunächst eine "inaktive" Dichtungsschicht 2 der erfindungsgemäßen Basisabdichtung. Deren wesentliche Aufgabe besteht darin, den Boden 1 und den Abfall 5 gegeneinander sicher abzudichten. Über der "inaktiven" Dichtungsschicht 2 befindet sich eine "aktive" Dichtungsschicht 3, deren Aufgabe darin besteht, die Schadstoffe aus durchsickerndem Sickerwasser durch chemische Reaktion zu binden. Auf der "aktiven" Dichtungsschicht 3 liegt eine sogenannte Dränschicht 4 auf, die ihrerseits die Basisabdichtung als Einheit betrachtet vom zu deponierenden Abfall 5 trennt. Die Wirkung der Dichtungsschichten kann zusätzlich noch dadurch verstärkt werden, daß oberhalb und /oder unterhalb der "inaktiven" Dichtungsschicht und/oder oberhalb der "aktiven" Dichtungsschicht eine Kunststoff-Folie 6 eingebaut wird. Die insoweit verstärkte Basisabdichtung ist in der Schemadarstellung gezeichnet.

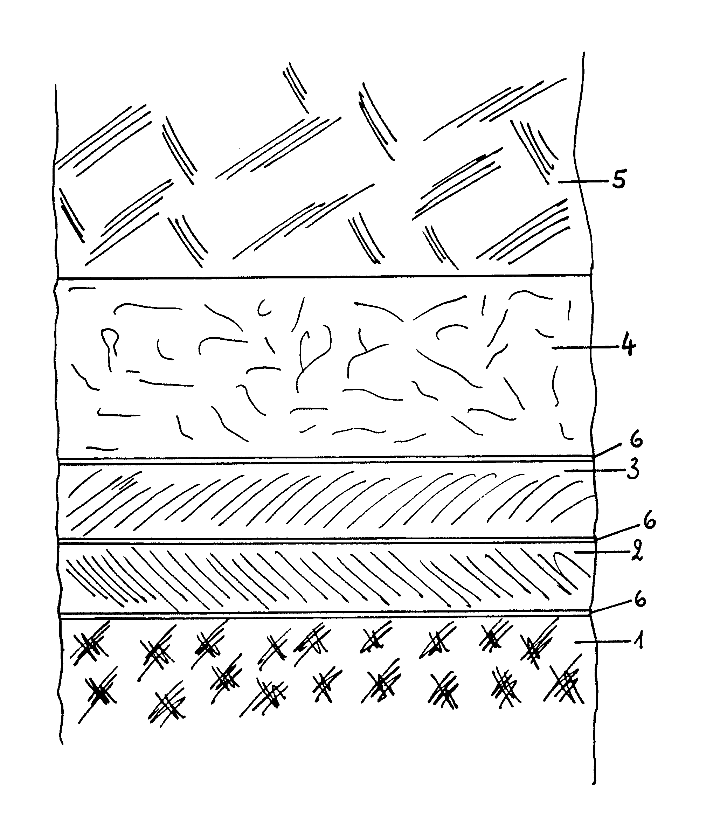

**Patentansprüche**

1. Basisabdichtung einer Abfalldeponie, dadurch gekennzeichnet, daß zwei oder mehrere getrennte Dichtungsschichten vorgesehen sind, wobei mindestens eine dem Abfall zugewandte (im folgenden "aktive" Schicht genannte) Schicht aus einem gegenüber chemischen Lösungen instabilen Material besteht und mindestens eine, dem gewachsenen Boden zugewandte Schicht (im folgenden "inaktive" Schicht genannte), aus einem chemisch beständigen Dichtungsmaterial besteht.

2. Basisabdichtung nach Anspruch 1, dadurch gekennzeichnet, daß die aktive Schicht aus Mineralien mit hoher Sorptionsfähigkeit aufgebaut, insbesondere eine Bentonit-vergütete Schicht ist.

3. Basisabdichtung nach Anspruch 1 oder 2, dadurch gekennzeichnet, daß die aktive Schicht aus Mineralien hoher chemischer Reaktivität, insbesondere aus Karbonatmineralien besteht.

4. Basisabdichtung nach einem der Ansprüche 1 bis 3, dadurch gekennzeichnet, daß die aktive Schicht aus Mineralien hoher Sorptionsfähigkeit und/oder Mineralien hoher chemischer Reaktivität wie z.B. den mineralischen Materialien Smektite, Palygorskite, Sepiolite, Allophane, Zeolithe, Nontronite, Attapulgite, Beringiete, Perlite, sowie Eisen- und Manganoxiden und -hydroxiden und/oder Carbonaten, Sulfaten und Chloriden.

5. Basisabdichtung nach Anspruch 4, dadurch gekennzeichnet, daß in der "aktiven" Schicht nicht oder nur zum Teil mineralische Materialien wie Aktivkohle oder Flugasche verwendet sind.

6. Basisabdichtung nach einem der Ansprüche 1 bis 5, dadurch gekennzeichnet, daß die inaktive Schicht aus einem sehr feinkörnigen Material sehr geringer Permeabilität aufgebaut ist.

7. Basisabdichtung nach Anspruch 6, dadurch gekennzeichnet, daß die inaktive Schicht aus kaolinitischen oder mit Kaolin vergüteten Tonen besteht.

8. Basisabdichtung nach Anspruch 7, dadurch gekennzeichnet, daß die mit Kaolin vergüteten Tone zusätzlich mittels Quarzmehl oder Wasserglas vergütet sind.

9. Basisabdichtung nach einem der Ansprüche 1 bis 7, dadurch gekennzeichnet, daß die inaktive Schicht aus anderen als kaolinitischen Tonen bzw. mit Kaolin vergüteten Tonen besteht, wobei ein chemisch stabiler Ton, der mit chemisch stabilen Materialien vergütet ist, zu verwenden ist.

10. Basisabdichtung nach einem der Ansprüche 1 bis 9, dadurch gekennzeichnet, daß als zusätzliche Dichtungsschicht unterhalb und/oder oberhalb der "inaktiven Dichtungsschicht" und/oder oberhalb der "aktiven" Schicht eine Kunststoff-Folie verwendet wird.

11. Basisabdichtung nach einem der Ansprüche 1 bis 10, dadurch gekennzeichnet, daß die Mächtigkeit der aktiven Schicht so gewählt ist, daß alle im Abfall vorkommenden Schadstoffe mit dem Material der aktiven Schicht reagieren können.

12. Basisabdichtung nach einem der Ansprüche 1 bis 11, dadurch gekennzeichnet, daß die Mächtigkeit der inaktiven Schicht so gewählt ist, daß die konvektive Transportgeschwindigkeit (Wassergeschwindigkeit) des aus dem Abfall austretenden Sickerwassers relativ zur diffusiven Transportgeschwindigkeit der Schadstoffe kleiner bzw. gleich groß ist.

## Europäisches Patentamt

# EUROPÄISCHER RECHERCHENBERICHT

Nummer der Anmeldung

# EP 91 10 2509

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | EP-A-0 292 491   (DYCKERHOFF & WIDMANN) <br> * Spalte 1, Zeile 47 - Spalte 2, Zeile 11 * * Spalte 3, Zeile 15 - Zeile 37; Abbildung 2 @ Spalte 7, Zeile 31 - Spalte 8, Zeile 13 * | 1-3,4,10 | E 02 D 31/00 <br> B 09 B 1/00 |
| | − − − | | |
| Y | US-A-2 531 427   (HAUSER) <br> * Spalte 2, Zeile 11 - Zeile 31 * | 4 | |
| | − − − | | |
| Y,A | WO-A-8 301 204   (RADIAN) <br> * Seite 8, Zeile 21 - Seite 9, Zeile 4 * * Seite 11, Zeile 27 - Seite 12, Zeile 7 * | 10,1,3 | |
| | − − − | | |
| A | EP-A-0 338 438   (CPM) <br> * Spalte 1, Zeile 9 - Zeile 20 * * Spalte 1, Zeile 45 - Spalte 2, Zeile 19 * | 6,7,9 | |
| | − − − | | |
| A | EP-A-0 216 751   (ÖMV) <br> * Spalte 1, Zeile 35 - Zeile 50 * | 8 | |
| | − − − − − | | |

**RECHERCHIERTE SACHGEBIETE (Int. Cl.5)**

E 02 D
B 09 B
B 65 D
C 01 B

Der vorliegende Recherchenbericht wurde für alle Patentansprüche erstellt

| Recherchenort | Abschlußdatum der Recherche | Prüfer |
|---|---|---|
| Den Haag | 29 Mai 91 | BELLINGACCI F. |